Europäisches Patentamt

European Patent Office

Office européen des brevets

(19)

(11) Veröffentlichungsnummer: **0 303 787**
**A2**

## (12) EUROPÄISCHE PATENTANMELDUNG

(21) Anmeldenummer: **88109504.6**

(22) Anmeldetag: **15.06.88**

(51) Int. Cl.4: **H04M 1/03**

(30) Priorität: **17.08.87 DE 3727328**

(43) Veröffentlichungstag der Anmeldung:
**22.02.89 Patentblatt 89/08**

(84) Benannte Vertragsstaaten:
**AT BE CH ES FR GB IT LI LU NL SE**

(71) Anmelder: **TELENORMA Telefonbau und
Normalzeit GmbH
Mainzer Landstrasse 128-146
D-6000 Frankfurt am Main(DE)**

(72) Erfinder: **Girscher, Wolfgang, Dipl.-Ing.
Woogstrasse 27
D-6000 Frankfurt am Main(DE)**
Erfinder: **Niederhöfer, Karl-Heinz, Dipl.-Ing.
Dalbergstrasse 4
D-6230 Frankfurt-Höchst(DE)**

(54) **Handapparat.**

(57)

2.1. Die Aufgabe besteht in einer einfacheren Anschlußmöglichkeit der elektroakustischen Wandler eines Handapparates an der Anschlußschnur.

2.2 Die elektroakustischen Wandler (3,4) sind mit Schneidklemmverbindern (5) ausgestattet, welche senkrecht an der der Wandleröffnung abgewandten Seite angeordnet sind. Die elektrischen Leiter 7 sind durch eine Folie (10) gehalten und werden beim Zusammenpressen der beiden Gehäuseschalen durch an der oberen Gehäuseschale (1) angebrachte Nasen (6) in die Schneidklemmverbinder (5) gedrückt.

2.3 Die Anordnung ermöglicht die einfache Montage von Handapparaten von Fernsprechteilnehmerstationen.

EP 0 303 787 A2

Fig.1

## Handapparat

Die Erfindung betrifft einen Handapparat bestehend aus einer unteren und einer oberen Gehäuseschale zur Aufnahme der jeweils elektrische Anschlüsse aufweisenden Hör- und der Sprechkapsel, die über jeweils ein Leiterpaar an der Handapparateschnur angeschlossen sind, welche am Sprechkapselende des Handapparates zugentlastet in das Gehäuse eingeführt ist.

Ein derartiger Handapparat ist bereits bekannt. So wird in der DE-AS 24 33 824 ein aus zwei Gehäusehälften zusammengesetzter Handapparat für Fernsprecheinrichtungen beschrieben, bei welchem eine kraftschlüssige Befestigung der mittels Klemmschuhen an die Adern der Anschlußschnur gesteckten akustischer Wandler erfolgt. In der Regel weist ein elektroakustischer Wandler zwei Anschlüsse auf, die zum Anschluß von Klemmschuhen ausgebildet sind. Bei der Montage eines derartigen Handapparates sind demnach 4 elektrische Verbindungen über die Klemmschuhe herzustellen, um die elektroakustischen Wandler an der Handapparateschnur elektrisch anzuschließen. Nach Einsetzen der elektroakustischen Wandler in die untere Gehäuseschale und nach dem elektrischen Anschluß derselben wird die obere Gehäuseschale auf die untere Gehäuseschale gesetzt und durch geeignete Mittel beide Schalen miteinander verbunden. Der Montageaufwand für einen derartigen Handapparat ist beträchtlich.

Die Aufgabe der Erfindung besteht nun darin, einen Handapparat für eine Fernsprechteilnehmerstation anzugeben, bei welchem eine rationellere Montage, insbesondere eine einfachere Herstellung der elektrischen Verbindungen möglich ist.

Diese Aufgabe wird dadurch gelöst, daß die elektrischen Anschlüsse der Hör- und der Sprechkasel als Schneidklemmverbinder ausgebildet sind, wobei diese auf der der Wandleröffnung abgewandten Seite der Hör-und der Sprechkapsel angeordnet sind und daß die obere Gehäuseschale Nasen ausweist, wobei jeweils zwei Nasen auf beiden Seiten eines Schneidklemmverbinders senkrecht zur Leiterrichtung angeordnet sind.

Durch die Benutzung von Schneidklemmverbindern, die bereits aus der DE-AS 1 590 699 bekannt sind, läßt sich der Aufwand zur Herstellung der elektrischen Verbindungen beträchtlich verkürzen. Nachdem die elektroakustischen Wandler in die unteren Gehäuseschale eingelegt sind, werden die Leiter in die Öffnungen der Schneidklemmverbinder eingelegt und durch die an der oberen Gehäuseschale angebrachten Nasen in die Schneidklemmverbinder hineingedrückt, wenn beide Gehäuseschalen miteinander verbunden werden.

Es ist bereits bekannt, die elektroakustischen Wandler eines Handapparates mit senkrecht auf der der Öffnung desselben abgewandten Seite angeordneten Anschlußstiften versehen. Hierbei wird der elektroakustische Wandler von einem Schaumstoffkörper umschlossen und in einen Handgriff eingesteckt, wobei auch die elektrische Verbindung mit der Handapparatschnur über die Steckverbindung hergestellt wird ( DE-OS 35 16 290).

Eine Weiterbildung der Erfindung besteht auch darin, daß die Leiterpaare durch eine Folie gehalten werden.

Hierdurch lassen sich die Leiter leichter in die Schneidklemmverbinder einführen, insbesondere dann, wenn die Folie entsprechende Führungslöcher aufweist, in welche an der unteren oder oberen Gehäuseschale angebrachte Führungsstifte eingreifen.

Weitere Vorteile ergeben sich aus den Unteransprüchen.

Die Erfindung wird anhand eines Ausführungsbeispiels näher erläutert, welches in der Zeichnung dargestellt ist. Es zeigt:

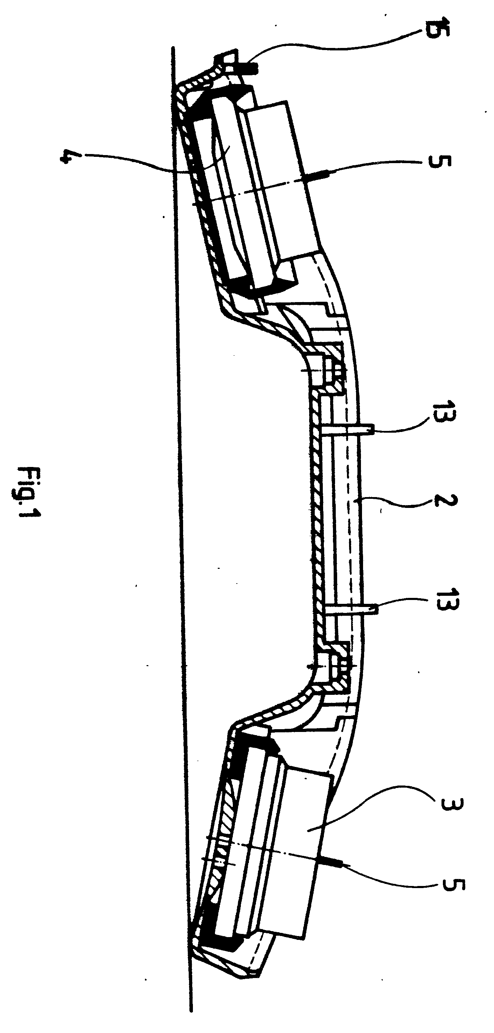

Fig. 1 einen Schnitt durch die untere Gehäuseschale mit den eingesetzten elektroakustischen Wandlern,

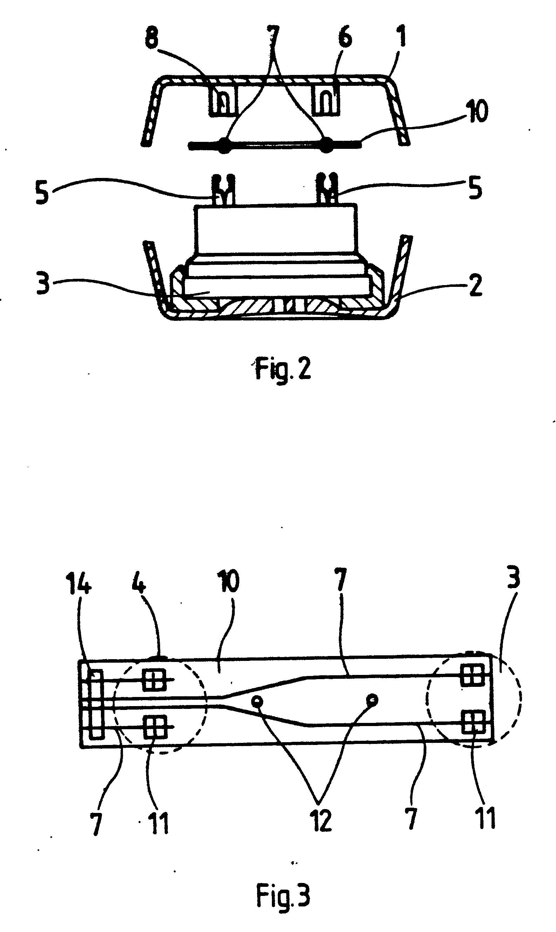

Fig. 2 einen Querschnitt durch den Handapparat im Bereich eines elektroakustischen Wandlers und

Fig. 3 den Aufbau der die Leiter tragenden Folie.

Die Hörkapsel 3 und die Sprechkapsel 4 werden zunächst in die untere Gehäuseschale 2 eingesetzt. Die beiden elektrakustischen Wandler weisen an der der Öffnung desselben abgewandten Seite jeweils zwei Schneidklemmverbinder 5 auf, die derart angeordnet sind, daß die in Längsrichtung des Handapparats verlaufenden Leiter in die Schneidklemmverbinder 5 eingesetzt werden können.

Die obere Gehäuseschale 1 weist Nasen 6 auf, welche vor und hinter den Schneidklemmverbindern sitzen und jeweils eine Drahtführungsöffnung 8 aufweisen. Die Nasen 6 und die Drahtführungsöffnungen 8 sind derart angeordnet, daß im zusammengesetzen Zustand beider Gehäuseschalen der Leiter 7 in die kontaktgebende und festhaltende Position in den Schneidklemmverbinder 5 hineingedrückt ist. Die Drahtführungsöffnung 8 führt dabei den Leiter 7 in die Öffnung des Schneitklemmverbinders 5.

Der Leiter 7 kann nun entweder als Blankdraht in die obere Gehäuseschale 1 eingespritzt sein oder auch nach dem Spritzvorgang in die obere Gehäuseschale 1 eingelegt werden, wobei dieser von den Drahtführungsöffnungen 8 gehalten wird. Es ist auch denkbar, den Leiter 7 als isolierten Draht vor dem Aufsetzen der Gehäuseschale 1 in die Öffnung der Schneidklemmverbinder 5 einzulegen.

Eine weitere Möglichkeit besteht in der Verwendung einer Folie 10, welche die Leiter 7 hält. Die Folie 10 weist Öffnungen 11 auf, welche die Nasen 6 durch dieselbe hindurchtreten lassen. Zur Führung der Folie 10 können auch an der oberen Gehäuseschale 1 bzw. untere Gehäuseschale 2 Führungsstifte 13 angebracht sein, welche in entsprechende Führungslöcher 12 der Folie eingreifen.

Zum Anschluß der Handapparateschnur ist ein nicht gezeigter Stecker vorgesehen, welcher ebenfalls über Schneidklemmverbinder mit den Leitern 7 verbunden werden kann. Der Anschlußstecker kann dabei von der oberen Gehäuseschale 1 gegen die an der unteren Gehäuseschale 2 angebrachten Nasen 15 gepreßt werden, um so, wie bei dem bereits beschriebenen Anschluß der elektroakustischen Wandler die Leiter 7 in die Schneidklemmverbinder des Anschlußsteckers hinein zu drücken.

Es wird noch darauf hingewiesen, daß die Folie 10 auch zur Aufnahme elektronischer Bauteile herangezogen werden kann, welche mit den Leitern 7 verbunden sind.

## Ansprüche

1. Handapparat bestehend aus einer unteren und einer oberen Gehäuseschale zur Aufnahme der jeweils elektrische Anschlüsse aufweisenden Hör- und der Sprechkapsel, die über jeweils ein Leiterpaar an der Handapparateschnur angeschlossen sind, welche am Sprechkapselende des Handapparates zugentlastet in das Gehäuse eingeführt ist,
dadurch gekennzeichnet,
daß die elektrischen Anschlüsse der Hör- und der Sprechkasel (3,4) als Schneidklemmverbinder (5) ausgebildet sind, wobei diese auf der der Wandleröffnung abgewandten Seite der Hör- und Sprechkasel (3,4) angeordnet sind und daß die obere Gehäuseschale (1) Nasen (6) aufweist, wobei jeweils zwei Nasen (6) auf beiden Seiten eines Schneidklemmverbinders (5) senkrecht zur Leiterrichtung angeordnet sind.

2. Handapparat nach Anspruch 1,
dadurch gekennzeichnet,
daß die Nasen (6) jeweils eine Drahtführungsöffnung (8) aufweisen.

3. Handapparat nach einem der Ansprüche 1 oder 2,
dadurch gekennzeichnet,
daß die Leiter (7) durch eine Folie (10) gehalten werden.

4. Handapparat nach einem der Ansprüche 1 bis 3,
dadurch gekennzeichnet,
daß die Folie (10) Öffnungen (11) für die Nasen (6) aufweist.

5. Handapparat nach einem der Ansprüche 1 bis 4,
dadurch gekennzeichnet,
daß die Folie (10) Führungslöcher (12) aufweist, in welche an der oberen oder unteren Gehäuseschale (1,2) angebrachte Führungsstifte (13) eingreifen.

6. Handapparat nach einem der Ansprüche 1 bis 5,
dadurch gekennzeichnet,
daß die Folie (10) an einem Ende eine sämtliche Leiterpaare (7) übergreifende Steckeröffnung (14) aufweist.

7. Handapparat nach Ansprüche 1 oder 2,
dadurch gekennzeichnet,
daß die Leiter (7) in die obere Gehäuseschale (1) eingespritzt sind.

8. Handapparat nach einm der Ansprüche 1 bis 7,
dadurch gekennzeichnet,
daß ein Anschlußstecker zum Anschluß der Handapparteschnur Schneidklemmverbinder aufweist.

9. Handapparat nach einem der Ansprüche 1 bis 8,
dadurch gekennzeichnet,
daß die untere oder die obere Gehäuseschale Nasen (15) aufweist, welche zu beiden Seiten der Schneidklemmverbinder des Anschlußsteckers und zwar senkrecht zur Leiterführung angebracht sind.

10. Handapparat nach einem der Ansprüche 1 bis 9,
dadurch gekennzeichnet,
daß die Nasen (15) Drahtführungsöffnungen aufweisen.

Fig.1

15

4

5

13

2

13

3

5

Fig. 2

Fig. 3